# EUROPEAN PATENT APPLICATION

(11) **EP 4 203 430 A1**
(43) Date of publication of application: **28.06.2023**
(21) Application number: 21217798.4
(22) Date of filing: 27.12.2021
(51) Int. Cl.: H04L 47/32, H04L 43/0817, H04L 43/0876, H04L 43/026, H04L 43/16

(54) **INTELLIGENT OVERLOAD PROTECTION IN SIGNALING PROCEDURE SCENARIOS IN COMMUNICATION SYSTEMS**

(71) Applicant: Deutsche Telekom AG, 53113 Bonn (DE)
(72) Inventor: Haas, Harald, 91282 Betzenstein (DE); Biewald, Manuel, 95514 Neustadt am Kulm (DE)
(74) Representative: Braun-Dullaeus Pannen Emmerling Patent- & Rechtsanwaltspartnerschaft mbB

(57) **Abstract**

Techniques for improving the stability and/or performance of a communication system, the method comprising the following steps executed by a network element:
assessing a current data load of a communication network and/or of the network element and/or of a further network element;
receiving a signaling message by a communication interface of the network element;
analyzing a message type of the signaling message and determining if the message type is a first type of message and/or a last type message;
handing over the current data load and the message type to a filtering algorithm, wherein the filtering algorithm is configured to apply at least the following rule:
• if the current data load is above a first threshold, wherein the first threshold is below a capacity threshold of communication network and/or of the network element and/or of a further network element, and if the message type is a first type of message, then drop the first type message or delay the forwarding of the first type message for further processing;
or
• if the current data load is above a first threshold, wherein the first threshold is below a capacity threshold of the communication network and/or of the network element and/or of a further network element, and if the message type is a last type of message, then forward the last type message for further processing.

## Description

The invention relates techniques to improve the stability and/or performance of a communication system, in particular by handling signaling traffic.

In practice, many problems can arise if capacity thresholds of a communication network and/or one or more network elements are trespassed. In the context of this invention, we focus on problems that deal with signaling messages which are exchanged between the different network elements (NE) within the communication network. When reaching a capacity threshold, currently signaling messages are dropped or can get lost by the network elements. In particular, those signaling messages are exchanged between different network elements to set up a communication between them. Currently, those signaling messages are dropped independently of the type and/or the nature of the distinct message.

As a downside, this leads to an interruption of the whole signaling procedure for the scenario in question and requires the whole signaling procedure to start again from scratch. In this case, resources and capacities of the communication network are wasted - especially when dropping "later" messages within a signaling procedure. For example, if a signaling procedure comprises seven different individual messages and if the seventh message is being dropped, then the six messages before the seventh message are wasted.

As indicated before, most of the signaling scenarios between network elements require a specific number of messages to be exchanged in order to successfully finish the signaling procedure and to reach "a final" state of a network element and/or a user equipment that is ready for the communication. For example, in the case of SS#7 location update procedure 7 - 9 different types of signaling messages need to be exchanged between the NEs.

An interruption - regardless at which states or phase within the signaling procedure it occurs - leads to an immediate retransmission or restart of the whole signaling procedure from the beginning. This is independent with respect to when the message was dropped within the procedure, i.e. if it was the second or the fourth message.

As a further downside, those retransmissions can lead to further capacity problems of the communication network as they cause artificial additional traffic load that can be shaped as big signaling waves (tsunamis data signaling waves) so that it can happen that the capacity threshold is trespassed again and another downside is that setting up the communication takes longer.

In the view of above, it is an object of the present invention to provide techniques to improve the stability and/or performance of a communication network. It is in particular the object of the invention to provide techniques to improve the usage of resources of signaling traffic.

This object is solved by the features of the independent claims.

The features of the various aspects of the invention described below or the various examples of implementation may be combined with each other, unless this is explicitly excluded or is technically impossible.

According to a first aspect of the invention, a method is provided to improve the stability and/or performance of a communication system. Particularly, the method is suited to make signaling traffic within the communication network more efficient. The method comprises the following steps executed by a network element:
- assessing a current data load of a communication system and/or of the network element and/or of a further network element;
   ∘ within a communication network, each of those devices can have its own capacity thresholds. The communication network or communication system can of course comprise the network elements, but in addition, the communication system can comprise data links, like leased line or cellular links, wherein those data links also have their distinct capacity thresholds. In principle, the "element" with the lowest threshold is the critical one that can cause problems to all the other elements to which it is connected. Therefore, it can be desirable to protect this element with the lowest threshold, i.e. the weakest element within a communication chain, from trespassing its capacity threshold. The current load can be measured by a measuring unit that is associated to the various elements itself but it is also possible that a central measuring unit measures the current load. In an embodiment, the current load is determined or measured individually for each of the various elements, i.e. the communication network and/or the network element and/or the further network elements; the current load can be a data traffic and/or other processing tasks (running calculations) that are performed by each of the various elements.
- receiving a signaling message by a communication interface of the network element and/or of a filtering unit;
   ∘ the communication interface can be configured to receive signaling messages; in telecommunication, signaling is the use of signals for controlling communications. This may constitute an information exchange concerning the establishment and control of a telecommunication circuit and the management of the network. A few examples: DTMF is an in-band, channel-associated register signaling system. It is not compelled. SS7 (e.g., TUP or ISUP) is an out-of-band, common-channel signaling system that incorporates both line and register signaling. Metering pulses (depending on the country, these are 50 Hz, 12 kHz or 16 kHz pulses sent by the exchange to payphones or metering boxes) are out-of-band (because they do not fall within the frequency range used by the telephony signal, which is 300 through 3400 Hz) and channel-associated. They are generally regarded as line signaling, although this is open to debate. E and M signaling (E&M) is an out-of-band channel-associated signaling system. The base system is intended for line signaling, but if decadic pulses are used it can also convey register information. E&M line signaling is however usually paired with DTMF register signaling. Loop start, ground start, reverse battery and revertive pulse systems are all DC, thus out of band, and all are channel-associated since the DC currents are on the talking wires;
- analyzing a message type of the signaling message and determining if the message type is a first type of message and/or a last type message;
   ∘ signaling messages can comprise many messages, which might be called sub-messages, that are exchanged between the network elements, which are part in the signaling process. All those different sub-messages serve another purpose and can therefore be described as having a different message type. For example, TCP handshake comprises of the following message types, wherein the signaling process begins with the first type of message and is completed with a last type of message: a first message type: SYN->; a second message type: <- SYN, ACK; a last message type: ACK->; an algorithm that can be implemented on the network element is configured to analyze the message type and to determine which message type was currently received; the algorithm can be configured to determine each of the possible message types. For that purpose, the algorithm has access to a database that stores protocol information of the various signaling messages. Based on the protocol information, it is possible to determine the message types; the first type of message can also be named a first message type, the last type of message can also be named a last message type, and so on.
- handing over the current data load and the message type to a filtering algorithm, wherein the filtering algorithm is configured to apply at least the following rule:
- if the current data load is above a first threshold, wherein the first threshold is below a capacity threshold of communication network and/or the first threshold is below a capacity threshold of the network element and/or the first threshold is below a capacity threshold of a further network element, and if the message type is a first type of message, then drop the first type message or additionally delay the forwarding of the first type message for further processing;
   or
- if the current data load is above a first threshold, wherein the first threshold is below a capacity threshold of communication network and/or the first threshold is below a capacity threshold of the network element and/or the first threshold is below a capacity threshold of a further network element, and if the message type is a last type of message, then forward the last type message for further processing.

The filtering algorithm can be implemented within a filtering unit. The filtering unit can also be an external unit that is associated to the network element. In particular, network elements can be upgraded with the filtering unit, e.g. by embedding the filter unit into the data traffic of the unit. Especially within the context of virtual communication networks or communication networks that are at least in part virtualized, the network element can be a network function. An example for this case is a 5G communication network. So, within the context of the invention, the network element is not limited to a physical entity but comprises also network functions that can be implemented within the communication network.

The capacity threshold is the threshold at which the network element and/or the communication system stops to function as intended because it is overloaded. In principle every network element and/or the communication system has its own capacity threshold. The first threshold is below the capacity threshold so that the network element and/or or the communication system still function as intended. But the first threshold is a value in which the entity in question is already close to a critical overload situation. The first threshold can be set to 75%, preferably set to 90% of the critical overload situation. The first threshold can also depend on the used signaling protocol in question, because different signaling protocols can differ in the number of their respective data type messages. In general, the lower the number of data type messages is, the higher can the first threshold be set. The first threshold can be predefined by a user, like a network provider. The value of the first threshold can depend on the individual network element and/or the communication system in question. The first threshold can be 10% lower, in particular 5% lower, and in a very special embodiment 1% lower than capacity threshold of the individual network element and/or the communication system in question. The first threshold can be predefined as being dependent from time and/or of traffic history.

If the method therefore starts at the first threshold, it is possible to prevent an overload of the network element and/or the communication system because the data traffic, in particular the signaling traffic, is efficiently reduced. Reducing the signaling traffic leads also to preventing data traffic that follows from a completed signaling process between network elements. Therefore, by reducing the signaling traffic, the data traffic subsequently following a successful signaling procedure is also stopped.

Hence, the invention has the advantage of efficiently reducing data traffic in situations, in which the communication system and/or the network elements are close to their individual capacity thresholds in order to provide a running system. Basically, this is achieved by avoiding randomly dropping of different message types. The invention aims to drop or to forward distinct message types so that already started signaling procedures can be completed efficiently. The idea is applicable to all network elements within a service chain. It has the effect that already started procedures will be finished successfully and the signaling wave can be processed more quickly. The method is particularly beneficial for signaling scenarios comprising of many different message types per scenario.

The rationale behind the first alternative is that if the network element and/or the communication system in question approaches a critical load situation, dropping the first type message is especially efficient because this is the start of every signaling procedure so that no other messages but the first type message have to be re-transmitted between the network elements. No second type message, no third type message and so on are wasted. Within the first alternative, there is an alternative to dropping the first type message. It is also possible to additionally delay the forwarding of the first type message for further processing, for example by introducing random timeouts, to distribute the data load due to the signaling traffic over time.

The rational of the second alternative is that at least the last type of message shall be forwarded for further processing because the last type of message completes the signaling process in question so that dropping this last type of message would require a complete retransmission of the whole signaling message procedure. Within the second alternative it is possible to drop at least a subset of messages other than the last type of message.

In an embodiment, especially an embodiment of the first alternative, messages other than the first type of message, i.e. the second type of message, the third type of message, the n-th type message are forwarded for further processing.

This provides the advantage that no type of messages of signaling procedure get lost, if the signaling procedure has already successfully started. This provides that no other types of messages apart from the first type of message are wasted and have to be retransmitted.

In an embodiment, further processing is performed on the communication system and/or of the network element and/or of further network elements.

If the further processing is performed on the network element itself, then the network element provides an efficient method to protect itself from getting overloaded due to reaching its capacity threshold. If the further processing is performed on the further network element or on the communication system, then the network element, which performs the method according to the invention, efficiently protects another element or system from reaching its capacity threshold. Hence, it performs third-party protection. To perform a third-party protection, the network element can be provided with the first threshold of the third-party element, i.e. the first threshold of the further network element or of the communication system. Those first thresholds values can be stored within a memory unit of the network element and/or being transmitted from the third-party element to the network.

In an embodiment, the network element has access to information of signaling protocols and/or that the messages indicate their type of message by a data field.

This provides the advantage that the network element can determine the type of message of the signaling message that it has received. The information can be stored within a memory unit of the network element and can be updated by a network provider if new signaling protocols are being used. However, it is also possible to adapt the data protocols so that they indicate their type of message by a distinct data field.

In an embodiment, the filtering algorithm selects which first type of messages are to be dropped or forwarded for further processing. The filtering algorithm can also select which first type of messages are to be additionally delayed.

Selecting a subset of first type of messages to be forwarded for further processing has the effect that the data traffic is not being reduced as much as if all first type of messages would be dropped, but it provides the advantage that signaling processes can still continue and new signaling processes can start at a data load level that does not reach the capacity threshold of the network elements and/or the communication system.

In an embodiment, the selection is based on a percentage of first type messages to be forwarded for further processing. For example, the algorithm can forward 50%, in a preferred embodiment 25% of the first type messages for further processing.

This provides the advantage of a selection rule that is easy to implement within the filtering algorithm and that can easily be changed if monitoring the data traffic shows that the percentage shall be adapted in order to prevent trespassing the capacity thresholds of the network elements.

In an embodiment, the percentage of selected first type of messages to be forward for further processing depends on the ratio of the current data load to the capacity threshold.

This provides the advantage that the percentage of selected first type of messages to be forwarded for further processing can be dynamically adjusted according to the ratio of the current data load to the capacity threshold. If the ratio is larger, then the current data load is closer to the capacity threshold so that the percentage can be lowered. This efficiently provides the compromise of facilitating signaling procedures while at the same time ensuring that capacity thresholds are not trespassed. For example, if the ratio of the current data load, in particular a signaling load, to the capacity threshold is 75%, then the percentage can be 25%. If the ratio of the current data load to the capacity threshold is 95%, then the percentage can be 5%. In an embodiment, the percentage can be selected so that the calculated ratio and the percentage sum up to 100%.

In an embodiment, the selection is based on a trained machine learning algorithm, wherein a corresponding training data set comprises as a first data set: selected first type messages to be forwarded for further processing, and as a second data set: a data traffic monitoring report associated to the selection of the first data set.

This provides the advantage that the selection is based on an actual outcome that has been monitored on a real selection of first type of messages. Another advantage is, that the trained machine learning algorithm gets better over the time. A network provider needs to mark the second data set either as being a positive one, which means that capacity thresholds were not trespassed or as being a negative one, which means that capacity thresholds were trespassed.

In an embodiment, the first type of message is transferred to a buffer in order to delay forwarding of the first type message for further processing.

The buffer can be a buffer of the network element or a buffer located on another device. This provides an efficient mechanism to delay the first type of messages. The buffer size shall be adjusted to the maximum amount of signaling traffic to be expected. But the advantage would be, that signaling traffic gets not lost.

In an embodiment, the filtering algorithm considers different types of first type messages for the selection, wherein the first type messages are differentiated at least as important or non-important first type messages, wherein the non-important first type messages can be dropped.

This provides the advantage that the filtering algorithm can select the more important first type of messages to be forwarded for further processing. That takes into account that some signaling procedures are more important than others. Especially it is possible to mark some first type of messages with a higher priority. The signaling messages which are marked as being more important or with higher priority can be those which are related to real-time systems. It can be expected that especially those signaling messages that correspond to the real-time system like autonomous driving are important to be forwarded with a high priority. It is also possible to consider DSCP settings or QCI classes. To enable to treat a low delay case as low delay and low loss case as low loss.

In an embodiment, all type message, in particular the first type message, is forwarded for further processing if the data load is below the first threshold.

This provides the advantage that the dropping of first type of messages only takes place if the data load reaches a critical level and/or that the dropping of first type of messages stops if the data load is again under a critical value.

According to a second aspect of the invention, a network entity is provided, wherein the network entity comprises
a communication interface configured to receive data traffic, in particular configured to receive signaling messages;
a processor, wherein the processor is configured to execute the steps of the method above.

In principle, the network entity can be any device that can be used within a communication system. For example, servers, user equipment, access points, eNodeB devices. The network entity needs to be able to communicate with other entities within a communication system. The communication system can be a communication system by a network provider.

As described above, the inventive network entity can protect itself or other devices from capacity overload by efficiently reducing signaling traffic.

According to a third aspect of the invention, a communication system is provided, wherein the communication system comprises
a communication network, wherein the communication network is configured to enable a data traffic, in particular a signaling data traffic, between network entities,
at least one network entity as described above, wherein at least one processor network entity is configured to execute the steps of the method described above.

According to a fourth aspect of the invention, a computer program is provided that comprises instructions which, when the program is executed by a network entity, cause the network entity to carry out the steps of the method described above.

In the following, preferred implementation examples of the present invention are explained with reference to the accompanying figure:
- Fig. 1:: shows a starting point of the invention.
- Fig. 2:: shows signaling procedures as done in the state of the art.
- Fig. 3:: shows the effect of signaling procedures as done in Fig. 2.
- Fig. 4: shows a signaling procedure according to invention.
- Fig. 5: shows a further signaling procedure according to invention.
- Fig. 6: shows a communication system according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

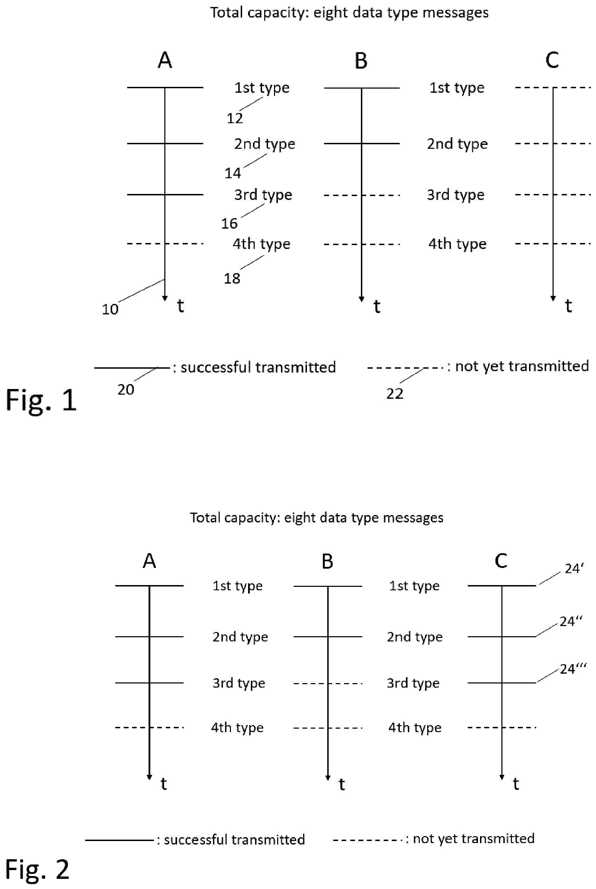

Fig. 1 shows a starting point of the method according to the invention. Fig. 1 shows three different kinds of signaling procedures A, B and C that each comprise of four different type of messages, namely a first type of message 12, a second type of message 14, a third type of message 16 and a fourth type of message 18. In principle, there is no need that each of those signaling procedures A, B, C has the same number of messages as it is shown in Fig. 1 for illustration purposes. It is assumed that the total capacity of type of messages that can be transmitted within a communication system and/or which can be processed in the network entity is eight data type of messages. Furthermore, it is assumed that the first threshold, as described in the description part, has already been reached. Each of the signaling messages has a vertical line 10 that represents a time axis starting from the top and ending at the arrow. Hence, the first type of message 12 is the first message that is transmitted in each of the signaling procedures and the fourth type of message 18 is the last type of message that is transmitted in each of the signaling procedures and that finishes the respective signaling procedure.

A continuous line 20 indicates that the respective type of message was successfully transmitted, wherein a dashed line 22 indicates that the respective type of message was not yet transmitted or not successfully transmitted.

Therefore: In signaling procedure A: the first type of message 12, the second type of message 14, and the third type of message 16 have been successfully transmitted, wherein the last type of message 18 has not yet been transmitted.

In signaling procedure B: the first type of message 12, and the second type of message 14 have been successfully transmitted, wherein the third type of message 16, and the last type of message 18 have not yet been transmitted.

In signaling procedure C: the first type of message 12, the second type of message 14, the third type of message 16, and the last type of message 18 have not yet been transmitted.

It follows that total five type of messages have already been sent so that it is possible within the capacity limit to send another three type of messages. However, from Fig. 1 it is evident that seven type of messages are necessary in order to finish three signaling procedures.

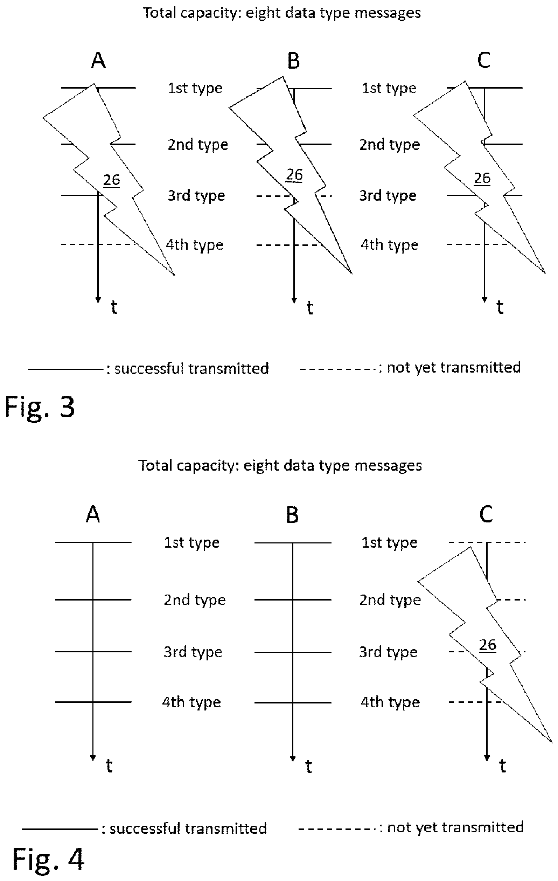

The transmission of those signaling messages is not coordinated in a way that first signaling procedure A is finished, then B and finally C, because typically those signaling procedures are totally independent from one another. So it can happen, as shown in Fig .2, that the next three type of messages 24', 24", 24'" are used for signaling procedure C. This has the effect that the capacity limit of the communication system has been consumed without finishing any of the signaling procedures A, B, C shown in Fig. 3. It follows, that in total eight data type messages are wasted and need to be re-transmitted. The lightning symbol 26 indicates that a signaling procedure has not been successfully finished. Basically, this is the case that can happen in state-of-the-art procedures.

The invention overcomes this disadvantage by analyzing if the current data load is above a first threshold, wherein the first threshold is below a capacity threshold of communication network and/or of the network element and/or of a further network element, and if the message type is a first type of message. If the message type is a first type of message then at least some of the first type of messages are dropped and not forwarded for further processing. Is also possible to delay the forwarding of the first type message for further processing.

As can be seen in Fig. 4, the only signaling procedure that has not yet finished the processing of the first type of message is signaling procedure C. If the first type of message of signaling procedure C is dropped, it has the effect that the three type of messages that are left within the capacity limit are used to complete both the signaling procedure A and B. This has the effect that only the first type of message of signaling procedure C needs to be re-transmitted. This greatly improves the signaling process.

The invention can also overcome this disadvantage by analyzing if the current data load is above the first threshold, wherein the first threshold is below a capacity threshold of the communication network and/or of the network element and/or of a further network element, and if the message type is a last type of message, then forward the last type message for further processing.

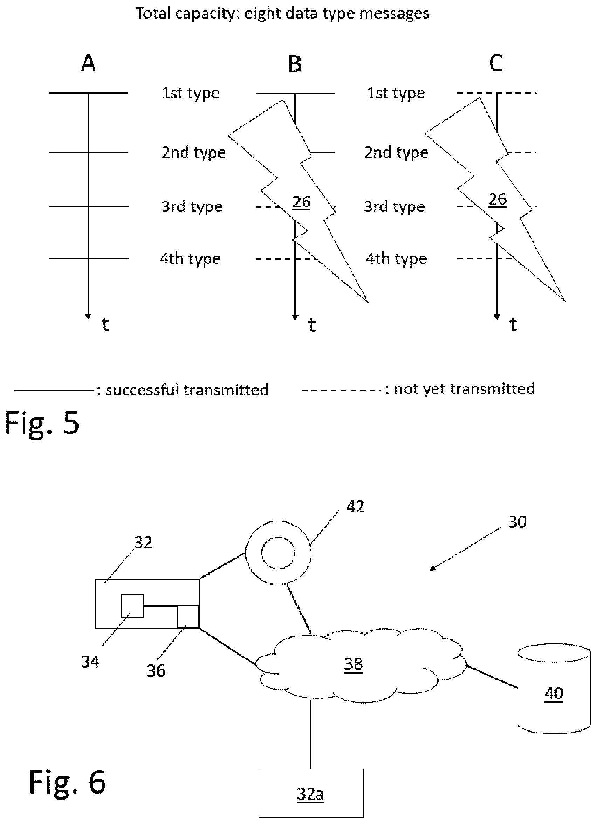

The rationale behind this is that signaling process is completed if at least the last type of message is forwarded for further processing. Fig. 5 shows that this leads to the effect that at least signaling procedure A can be completed. Even if this procedure is not as good as the one in Fig. 4, it is still better than the one shown in Fig. 3.

If one would change this approach accordingly, the invention can also overcome this disadvantage by analyzing if the current data load is above the first threshold, wherein the first threshold is below a capacity threshold of the communication network and/or of the network element and/or of a further network element, and if the message type is a last type of message or a type of message before the last type of message, then forward the last type message for further processing. Then this could lead to less wasted messages if the capacity limit is not being trespassed. However, it decreases the risk to trespass the capacity limit.

In the following, there are a few examples of signaling procedures from mobile networks (2G-5G) listed (e.g. SS7, diameter and http2). Those signaling procedures can be performed in 2G, 3G, 4G, 5G and/or future mobile networks.

### Examples:

2G/3G, SS#7:
   Location Update Procedure:
      1. Authentication Request / Response;
      2. Ciphering Mode Command / Complete
      3. Location Updating Accept
      4. TIMSI Reallocation complete
         etc.
   Combined Location Update:
      1. Authentication Request... ;
      2. etc. ;
   SMS Signaling:
      1. SRIfSM;
      2. SMS MT;
   Voice (legacy) different scenarios and protocols are available:
      1. Provide Roaming Number;
      2. etc.;
Data:
   GPRS Attach Procedure:
      1. Identity Request / Response;
      2. Update Location (SGSN info to HLR about new location);
      3. Insert Subscriber Data / Ack;
      4. Update Location Ack;
         etc.
   Create PDP Context:
      1. Create PDP Context Request;
      2. Create PDP Context Answer;
4G:
   LTE Attach Procedure:
      1. Diameter Update Location Request /Answer;
      2. Create Session Request / Response;
      3. Modify Bearer Request;
      4. etc.
   Create Session:
      1. Create Session Request;
      2. Create Session Answer;
      3. Modify Bearer Request;
      4. Modify Bearer Response;
      5. etc.
   VoLTE Registration
      1. SIP Register;
      2. Reject (challenge number);
      3. SIP Register (incl. correct Challenge number);
      4. etc.
   TCP signaling:
      1. SYN-SENT;
      2. SYN/ACK-RECEIVED;
      3. ACK-SENT ;
      4. etc. ;
   5G Stand alone:
      Registration Procedure [as described in 3GPP TS 23.502 (4.2.2.2.2)]
   UE-requested PDU Session Establishment [ as described in 3GPP TS 23.502 (4.3.2.2.1), 24.501 (6.4.1)]

Further signaling scenarios are also applicable to this idea.

Fig. 6 shows a communication system 30 according to the invention. The communication system 30 is configured to execute the steps according to the invention and comprises a network element 32 that can be configured to execute the steps according to the invention. The network element 32 shows a processor 34 on which the inventive algorithm can be implemented and has a communication interface 36 to communicate over a network environment 38 with other devices within the communication system. The other devices can be a server 40 and/or a further network element 32a. The inventive algorithm can also be implemented on the server 40. The current load can be measured with a measuring unit 42 that can be placed within the network environment 38 and/or it can be associated, even integrated, into the network element 32 and/or a server 40. By executing the steps according to the invention, the server 40 and/or the network element 32 can protect themselves from running into a capacity limit due to signaling procedures or they can protect other devices, for example a further network 32a.

## Claims

1. A method to improve the stability and/or performance of a communication system, the method comprising the following steps executed by a network element:
assessing a current data load of a communication network and/or of the network element and/or of a further network element;
receiving a signaling message by a communication interface of the network element;
analyzing a message type of the signaling message and determining if the message type is a first type of message and/or a last type message;
handing over the current data load and the message type to a filtering algorithm, wherein the filtering algorithm is configured to apply at least the following rule:
• if the current data load is above a first threshold, wherein the first threshold is below a capacity threshold of communication network and/or of the network element and/or of a further network element, and if the message type is a first type of message, then drop the first type message or additionally delay the forwarding of the first type message for further processing;
or
• if the current data load is above a first threshold, wherein the first threshold is below a capacity threshold of communication network and/or of the network element and/or of a further network element, and if the message type is a last type of message, then forward the last type message for further processing.

2. The method of claim 1, wherein messages other than the first type of message are forwarded for further processing.

3. The method of any of the claims, wherein further processing is performed on the communication network and/or of the network element and/or of a further network element.

4. The method of any of the claims, wherein the network element has access to information of signaling protocols and/or that the messages indicate their type of message by a data field.

5. The method of any of the claims, wherein the filter algorithm selects which first type of messages is to be dropped and/or delayed or forwarded for further processing.

6. The method of claim 5, wherein the selection is based on a percentage of first type of messages to be forwarded for further processing.

7. The method of claim 6, wherein the percentage of selected first type of messages to be forward for further processing depends on the ratio of the current data load to the capacity threshold.

8. The method of claim 5, wherein the selection is based on a trained machine learning algorithm, wherein a corresponding training data set comprises as a first data set: selected first type of messages to forwarded for further processing, and as a second data set: a data traffic monitoring report associated to the selection of the first data set.

9. The method of any of the claims, wherein the first type of message is transferred to a buffer in order to delay forwarding of the first type message for further processing.

10. The method of any of the claims 5-9, wherein the filtering algorithm considers different types of first type messages for the selection, wherein the first type messages are differentiated at least as important and non-important first type messages.

11. The method of claim 10, wherein the non-important first type messages are dropped.

12. The method of any of the claims, wherein all type messages, in particular the first type message, is forwarded for further processing if the data load is below the first threshold.

13. A network entity comprising
a communication interface configured to receive data traffic, in particular configured to receive signaling messages;
a processor, wherein the processor is configured to execute the steps of the method according to any of the claims 1-12.

14. A communication system comprising
a communication network, wherein the communication network is configured to enable a data traffic, in particular a signaling data traffic, between network entities,
at least one network entity according to claim 13, wherein the at least one processor network entity is configured to execute the steps of the method according to any of the claims 1-12.

15. A computer program, in particular a network function, comprising instructions which, when the program is executed by a processor, cause the processor to carry out the steps of the method of claims 1-13.
